# EUROPÄISCHE PATENTSCHRIFT

(11) **EP 0 579 011 B1**
(45) Veröffentlichungstag und Bekanntmachung des Hinweises auf die Patenterteilung: **04.03.1998**
(21) Anmeldenummer: 93110107.5
(22) Anmeldetag: 24.06.1993
(51) Int. Cl.: C09B 29/00, C09B 44/10, C09B 69/06

(54) **Kationische Thiadiazoldiphenylaminfarbstoffe**
Cationic thiadiazolediphenylamine dyestuffs
Colorants cationiques de type thiadiazolediphénylamine

(30) Priorität: 07.07.1992 DE 4222257
(43) Veröffentlichungstag der Anmeldung: 19.01.1994
(73) Patentinhaber: BAYER AG, 51368 Leverkusen (DE)
(72) Erfinder: Berneth, Horst, Dr., D-51373 Leverkusen (DE); Hartwich, Werner, D-50767 Köln (DE); Lange, Karl-Heinrich, Dr., D-51399 Burscheid (DE)

(56) Entgegenhaltungen:
- EP-A- 0 045 402
- EP-A- 0 210 139
- EP-A- 0 495 250
- GB-A- 2 017 134

## Beschreibung

Die vorliegende Erfindung betrifft kationische Thiadiazoldiphenylaminfarbstoffe der Formel (I) 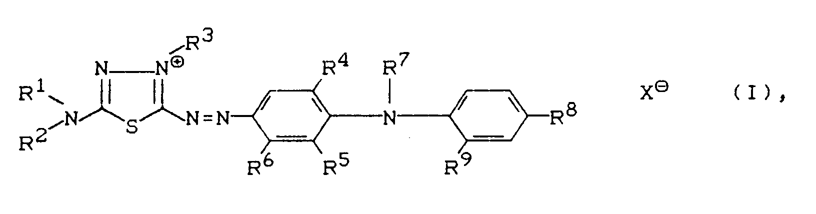 in der
- R¹ und R²: unabhängig voneinander Wasserstoff, Alkyl, Alkenyl, Cycloalkyl, Aralkyl oder einen gegebenenfalls über eine Methylen- oder Ethylenbrücke gebundenen Heterocyclus bedeuten, wobei R¹ und R² gemeinsam mit dem dazwischenliegenden Stickstoffatom auch einen Heterocyclus bilden können,
- R³: Alkyl, Alkenyl, Cycloalkyl oder Aralkyl bedeutet,
- R⁴ und R⁵: unabhängig voneinander Wasserstoff, Alkyl, Alkoxy oder Halogen bedeuten,
- R⁶: Wasserstoff, Alkyl, Alkoxy, Aryloxy, Arylamino, Halogen, Cyano, Alkoxycarbonyl oder Nitro bedeutet, wobei
- R⁵ und R⁶: gemeinsam auch eine -CH=CH-CH=CH-Brücke bilden können,
- R⁷: Wasserstoff, Alkyl, Cycloalkyl, Alkenyl, Aralkyl oder Aryl bedeutet,
- R⁸ und R⁹: unabhängig voneinander Wasserstoff, Alkyl, Alkoxy, Aryloxy, Halogen, Cyano, Alkoxycarbonyl, Nitro oder Acylamino bedeuten,
wobei
- R⁴ mit R⁷: auch eine 2- oder 3-gliedrige Kohlenstoffbrücke bilden kann, die gegebenenfalls mit 1 bis 3 Alkylgruppen substituiert sein kann oder
wobei
- R⁴ mit R⁹: auch eine direkte Bindung oder eine Sauerstoffbrücke bilden kann und
- X^{⊖}: ein Anion bedeutet,
wobei alle vorhandenen Alkyl-, Alkenyl-, Cycloalkyl-, Aralkyl-, Aryl-, Alkoxy- und heterocyclischen Reste gegebenenfalls mit nichtionogenen Substituenten, Carboxylgruppen, Ammoniumgruppen und/oder Pyridiniumgruppen substituiert sein können.

Vorzugsweise ist wenigstens einer der Reste R⁴, R⁵, R⁶, R⁸ und R⁹ verschieden von Wasserstoff oder R⁵ und R⁶ bilden gemeinsam eine -CH=CH-CH=CH-Brücke.

Nichtionogene Substituenten sind beispielsweise die in der Farbstoffchemie üblichen, nicht dissoziierenden Substituenten, wie Cyano, Hydroxy, Fluor, Chlor, Brom, Nitro, Alkyl, Monoalkylamino, Dialkylamino, Alkoxy, Phenyl, Acyloxy, Acylamino, Alkoxycarbonyl und Alkoxycarbonyloxy.

Alkylreste, auch solche in Alkoxy- und Aralkylresten, sind beispielsweise solche mit 1 bis 8, vorzugsweise 1 bis 4 C-Atomen. Sie können auch verzweigt sein.

Alkenylreste sind beispielsweise solche mit 2 bis 6, vorzugsweise 2 bis 3 C-Atomen.

Cycloalkylreste sind beispielsweise solche mit 4 bis 7, vorzugsweise 5 bis 6 C-Atomen.

Halogen steht vorzugsweise für Fluor, Chlor oder Brom.

Arylreste, auch solche in Aralkylresten, sind vorzugsweise Phenylreste, die gegebenenfalls durch 1 bis 3 der oben beschriebenen nichtionogenen Substituenten und/oder eine Carboxylgruppe substituiert sein können.

Heterocyclische Reste sind beispielsweise Thienyl, Furyl und Pyridyl, sowie ihre teilweise oder vollständig hydrierten Derivate. Sie können gegebenenfalls 1 bis 3 der oben beschriebenen nichtionogenen Substituenten enthalten.

Als Anionen sind farblose, organische und anorganische Anionen bevorzugt, beispielsweise Fluorid, Chlorid, Bromid, Iodid, Perchlorat, Tetrafluoroborat, Hydroxid, Hydrogensulfat, Sulfat, Dihydrogenphosphat, Hydrogenphosphat, Phosphat, Hydrogencarbonat, Carbonat, Methylsulfat, Ethylsulfat, Cyanat, Thiocyanat, Tri- und Tetrachlorozinkat, Tetrachloroferrat und Anionen gesättigter oder ungesättigter aliphatischer, cycloaliphatischer, aromatischer oder heterocyclischer Carbon- und Sulfonsäuren wie Formiat, Acetat, Hydroxyacetat, Cyanacetat, Propionat, Hydroxypropionat, Oxalat, Citrat, Lactat, Tartrat, das Anion der Cyclohexancarbonsäure, Phenylacetat, Benzoat, das Anion der Nikotinsäure, Methansulfonat, Ethansulfonat, Benzolsulfonat, Chlorbenzolsulfonat, Toluolsulfonat und Hexafluorosilikat.

Wenn es sich um mehrwertige Anionen handelt, z.B. um Sulfat oder Oxalat, dann steht in Formel (I) X^{⊖} für ein Äquivalent solch eines mehrwertigen Anions.

Bevorzugt sind kationische Thiadiazoldiphenylaminfarbstoffe der Formel (I), in der
- R¹ und R²: unabhängig je einen gegebenenfalls durch Hydroxy, Halogen, Cyano, C₁-C₄-Alkoxy, Aminocarbonyl und/oder C₁-C₄-Alkoxycarbonyl substituierten C₁-C₈-Alkylrest, Allyl, Cyclopentyl, Cyclohexyl, einen gegebenenfalls durch Halogen, Cyano, C₁-C₄-Alkyl und/oder C₁-C₄-Alkoxy substituierten Benzyl- oder Phenethylrest, Tetramethylensulfonylrest, Tetrahydrofurylmethyl-, Pyridylmethyl- oder Pyridylethylrest bedeuten, wobei R² auch Wasserstoff bedeuten kann, oder
- R¹ und R²: gemeinsam mit dem dazwischenliegenden Stickstoffatom einen gegebenenfalls durch bis zu 4 Methylgruppen substituierten Pyrrolidino-, Piperidino- oder Morpholinorest oder einen gegebenenfalls am Stickstoff durch Methyl, Ethyl, Hydroxyethyl oder Aminoethyl substituierten Piperazinorest bedeuten,
- R³: gegebenenfalls durch Hydroxy, Halogen, Cyano, C₁-C₄-Alkoxy, Aminocarbonyl und/oder C₁-C₄-Alkoxycarbonyl substituiertes C₁-C₄-Alkyl, Allyl oder einen gegebenenfalls durch Halogen, C₁-C₄-Alkyl und/oder C₁-C₄-Alkoxy substituierten Benzyl- oder Phenethylrest bedeutet,
- R⁴ und R⁵: unabhängig voneinander Wasserstoff, C₁-C₄-Alkyl, C₁-C₄-Alkoxy oder Halogen bedeuten,
- R⁶: Wasserstoff, C₁-C₄-Alkyl, C₁-C₄-Alkoxy, C₆-C₁₀-Aryloxy, C₆-C₁₀-Arylamino, Halogen, Cyano, C₁-C₄-Alkoxycarbonyl oder Nitro bedeutet, wobei
- R⁵ und R⁶: gemeinsam auch eine -CH=CH-CH=CH-Brücke bilden können,
- R⁷: Wasserstoff, gegebenenfalls durch Hydroxy, Halogen, Cyano, C₁-C₄-Alkoxy, Aminocarbonyl und/oder C₁-C₄-Alkoxycarbonyl substituiertes C₁-C₄-Alkyl, Allyl, Cyclopentyl, Cyclohexyl oder einen gegebenenfalls durch Halogen, C₁-C₄-Alkyl und/oder C₁-C₄-Alkoxy substituierten Benzyl-, Phenethyl- oder Phenylrest bedeutet,
- R⁸ und R⁹: unabhängig voneinander Wasserstoff, gegebenenfalls durch Hydroxy, Halogen, Cyano oder C₁-C₄-Alkoxy substituiertes C₁-C₄-Alkyl, C₁-C₄-Alkoxy, C₆-C₁₀-Aryloxy, Halogen, Cyano, C₁-C₄-Alkoxycarbonyl, Nitro oder C₁-C₄-Alkanoylamino bedeuten, wobei
- R⁴ mit R⁷: auch eine 2- oder 3-gliedrige Kohlenstoffbrücke bedeuten, die gegebenenfalls mit 1 bis 3 Methyl- und/oder Ethylgruppen substituiert sein kann oder
wobei
- R⁴ mit R⁹: auch eine direkte Bindung oder eine Sauerstoffbrücke bilden kann und
- X^{⊖}: ein Anion bedeutet.

Besonders bevorzugt sind kationische Thiadiazoldiphenylaminfarbstoffe der Formel (I), in der
- R¹ und R²: unabhängig voneinander Methyl, Ethyl, Propyl, Butyl, Methylpropyl, Pentyl, Methylbutyl, Dimethylpropyl, Hexyl, Hydroxyethyl, Hydroxypropyl, Chlorethyl, Cyanomethyl, Cyanoethyl, Cyanopropyl, Methoxyethyl, Ethoxyethyl, Methoxypropyl, Aminocarbonylmethyl, Aminocarbonylethyl, Methoxycarbonylmethyl, Methoxycarbonylethyl, Allyl, Cyclohexyl, Benzyl, Phenethyl, Methylbenzyl, Chlorbenzyl, Methoxybenzyl, Tetramethylensulfon-3-yl, Furfuryl, 2- oder 4-Pyridylmethyl oder 2- oder 4-Pyridylethyl bedeuten und R² auch Wasserstoff bedeuten kann oder
- R¹ und R²: gemeinsam mit dem dazwischenliegenden Stickstoffatom Pyrrolidino, Piperidino, gegebenenfalls am Stickstoff durch Methyl, Ethyl, Hydroxyethyl oder Aminoethyl substituiertes Piperazino oder Morpholino bedeuten,
- R³: Methyl, Ethyl, Propyl, Butyl, Hydroxyethyl, Hydroxypropyl, Hydroxybutyl, Chlorethyl, Cyanomethyl, Cyanoethyl, Cyanopropyl, Methoxyethyl, Ethoxyethyl, Methoxypropyl, Aminocarbonylethyl, Methoxycarbonylethyl, Ethoxycarbonylethyl, Allyl, Benzyl, Phenethyl, Methylbenzyl, Chlorbenzyl oder Methoxybenzyl bedeutet,
- R⁴ und R⁵: unabhängig voneinander Wasserstoff, Methyl, Ethyl, Methoxy, Ethoxy oder Chlor bedeuten,
- R⁶: Wasserstoff, Methyl, Ethyl, Methoxy, Ethoxy, Phenoxy, Anilino, Fluor, Chlor, Brom, Cyano, Methoxycarbonyl, Ethoxycarbonyl oder Nitro bedeutet, wobei
- R⁵ und R⁶: gemeinsam auch eine -CH=CH-CH=CH-Brücke bilden können,
- R⁷: Wasserstoff, Methyl, Ethyl, Propyl, Butyl, Hydroxyethyl, Hydroxypropyl, Chlorethyl, Cyanomethyl, Cyanoethyl, Cyanopropyl, Methoxyethyl, Ethoxyethyl, Aminocarbonylethyl, Methoxycarbonylethyl, Ethoxycarbonylethyl, Allyl, Benzyl, Phenethyl, Methylbenzyl, Phenyl, Chlorphenyl, Methylphenyl oder Methoxyphenyl bedeutet,
- R⁸ und R⁹: unabhängig voneinander Wasserstoff, Methyl, Ethyl, Methoxy, Ethoxy, Phenoxy, Chlor, Cyano, Methoxycarbonyl, Nitro, Acetylamino oder Propionylamino bedeuten oder
- R⁴ mit R⁷: eine -CH₂-CH₂-, -CH₂-CH₂-CH₂-, -CH₂-CH(CH₃)- oder -CH(CH₃)-CH₂-C(CH₃)₂-Brücke bedeuten oder
- R⁴ mit R⁹: eine direkte Bindung oder eine Sauerstoffbrücke bedeuten und
- X^{⊖}: ein Anion bedeutet.

Besonders bevorzugt sind auch kationische Thiadiazoldiphenylaminfarbstoffe der Formel (I), in der
- R¹ und R²: unabhängig voneinander Methyl, Ethyl, Propyl, Butyl, Hydroxyethyl, Hydroxypropyl, Cyanoethyl, Methoxyethyl oder Ethoxyethyl bedeuten oder
- R¹ und R²: gemeinsam mit dem dazwischenliegenden Stickstoffatom Morpholino bedeuten,
- R³: Methyl, Ethyl, Hydroxyethyl, Hydroxypropyl oder Cyanoethyl bedeutet,
- R⁴: Methyl, Methoxy, Ethoxy oder Chlor bedeutet,
- R⁵: Wasserstoff bedeutet,
- R⁶: Wasserstoff, Methyl, Chlor, Methoxy oder Cyano bedeutet oder
- R⁵ und R⁶: gemeinsam eine -CH=CH-CH=CH-Brücke bedeuten,
- R⁷: Wasserstoff, Methyl, Hydroxyethyl, Hydroxypropyl, Cyanoethyl bedeutet,
- R⁸ und R⁹: unabhängig voneinander Wasserstoff, Methyl, Methoxy, Chlor, Cyano, Nitro oder Acetylamino bedeuten und
- X^{⊖}: ein Anion bedeutet.

Ganz besonders bevorzugt sind kationische Thiadiazoldiphenylaminfarbstoffe der Formel (I), in der
- R⁷: Wasserstoff bedeutet und alle anderen Reste die unmittelbar oben angegebene Bedeutung haben.

Die vorliegende Erfindung betrifft weiterhin Anhydrobasen der Formel (II) 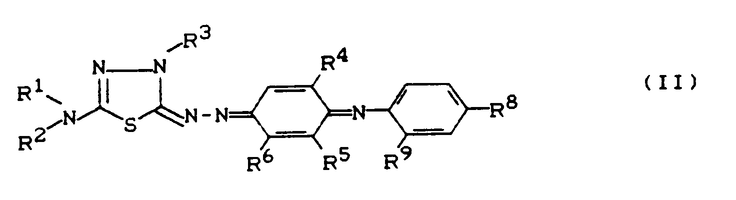 in der R¹ bis R⁶, R⁸ und R⁹ die bei Formel (I) angegebene allgemeine, bevorzugte und besonders bevorzugte Bedeutung haben.

Die Anhydrobasen der Formel (II) können aus den Farbstoffen der Formel (I) durch Umsetzung mit Basen in Gegenwart eines Lösungsmittels erhalten werden.

Hierfür geeignete Basen sind beispielsweise Hydroxide wie Natrium-, Kalium- und Calciumhydroxid, Oxide wie Magnesiumoxid, Alkoholate wie Natriummethylat, -ethylat und -tert.-butylat, Amine wie Triethylamin, Di- oder Triethanolamin, Piperidin oder Pyridin oder basische Ionenaustauscher auf der Basis Styrol/Divinylbenzol.

Geeignete Lösungsmittel sind beispielsweise Wasser, Alkohole wie Methanol, Ethanol, Isopropanol oder Glykole, Ketone wie Aceton oder Butanon, Amide wie Dimethylformamid, Dimethylacetamid, N-Methyl-pyrrolidon oder N-Methylcaprolactam, Nitrile wie Acetonitril und 3-Hydroxypropionitril, Sulfoxide wie Dimethyl-sulfoxid, Sulfone wie Sulfolan und Dimethylsulfon oder Mischungen davon.

Die Anhydrobasen der Formel (II) sind geeignete Zwischenprodukte zur Herstellung von Farbstoffen der Formel (I), in der R⁷ Wasserstoff bedeutet, mit solchen Anionen X^{⊖}, die durch eines der nachfolgend beschriebenen Herstellungsverfahren für Farbstoffe der Formel (I) nicht oder nur mit großem Aufwand eingeführt werden können. Man kann so Farbstoffe der Formel (I) herstellen, die durch Variation des Anions X^{⊖} besondere Eigenschaften erhalten, z.B. bessere Löslichkeit und/oder bessere Eignung zur Herstellung von flüssigen Formulierungen. Hierzu können Anhydrobasen der Formel (II) mit der Säure der Formel HX umgesetzt werden, deren Anion eingeführt werden soll. Die Umsetzung kann gegebenenfalls in Gegenwart eines Lösungsmittels und unter Kühlung, bei Raumtemperatur oder Temperaturen bis zum Siedepunkt des Mediums durchgeführt werden.

Lösungsmittel können beispielsweise sein ein Überschuß der Säure HX, Wasser, Glykole wie Ethylen- oder Propylenglykol, Amide wie ε-Caprolactam, Nitrile wie Oxypropionitril, die oben für die Herstellung der Anhydrobasen aufgeführten Lösungsmittel oder Mischungen davon.

So hergestellte Farbstoffe der Formel (I) fallen entweder aus dem Reaktionsgemisch aus oder ergeben darin eine stabile Lösung.

Die Anhydrobasen der Formel (II) selbst sind auch geeignet zum Anfärben von Fasern und Geweben aus Polyester sowie als Farbstoffe für den Sublimationstransferdruck, wie er beispielsweise in EP-A 0 384 040 beschrieben ist.

Die vorliegende Erfindung betrifft weiterhin ein Verfahren zur Herstellung von kationischen Thiadiazoldiphenylaminfarbstoffen der Formel (I), das dadurch gekennzeichnet ist, daß man 2-Amino-1,3,4-thiadiazole der Formel (III) 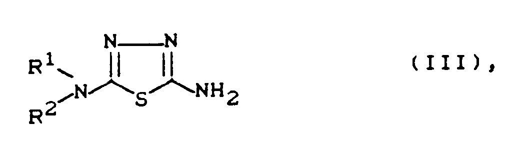 in der
R¹ und R² die bei Formel (I) angegebene allgemeine, bevorzugte und besonders bevorzugte Bedeutung haben, diazotiert,
auf Diphenylaminderivate der Formel (IV) 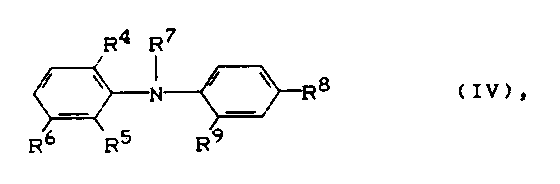 in der
R⁴ bis R⁹ die bei Formel (I) angegebene, allgemeine, bevorzugte und besonders bevorzugte Bedeutung haben,
kuppelt und dann mit Verbindungen der Formel (V)

R³X (V)

in der R³ und X die bei Formel (I) angegebene allgemeine, bevorzugte und besonders bevorzugte Bedeutung haben, oder Vorstufen davon
quaterniert.

Die 2-Amino-1,3,4-thiadiazole der Formel (III) sind z.B. aus der DE-A 2 811 258 bekannt oder analog dazu erhältlich. Die Diphenylaminderivate der Formel (IV) sind z.B. aus Houben-Weyl, Methoden der organischen Chemie, Band XI/1 bekannt oder analog dazu erhältlich.

Die vorliegende Erfindung betrifft noch ein weiteres Verfahren zur Herstellung von kationischen Thiadiazoldiphenylaminfarbstoffen der Formel (I), das dadurch gekennzeichnet ist, daß man Farbstoffe der Formel (VI) 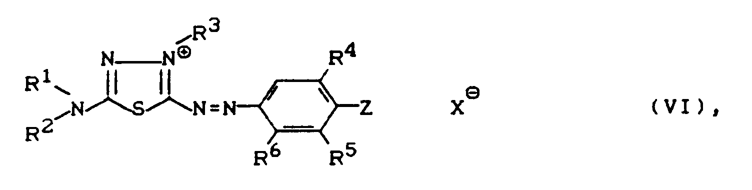 in der
R¹ bis R⁶ und X^{⊖} die bei Formel (I) angegebene allgemeine, bevorzugte und besonders bevorzugte Bedeutung haben und

- Z: für Halogen, Hydroxy, Alkoxy, Cycloalkoxy, Aryloxy, Amino, Dialkylamino, Acyloxy oder Acylamino steht,
mit Aminen der Formel (VII) 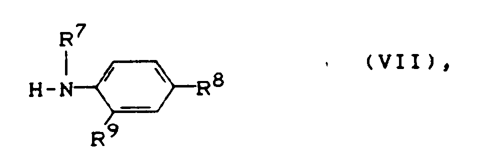 in der
- R⁷ bis R⁹: die bei Formel (I) angegebene allgemeine, bevorzugte und besonders bevorzugte Bedeutung haben,
umsetzt.

In Formel (VI) steht Z vorzugsweise für Fluor, Chlor, Brom, Hydroxy, C₁-C₄-Alkoxy, C₅-C₇-Cycloalkoxy, C₆-C₁₀-Aryloxy, NR'R'', wobei R' und R'' unabhängig voneinander für Wasserstoff oder C₁-C₆-Alkyl stehen, C₁-C₆-Alkanoyloxy, C₆-C₁₀-Aroyloxy, C₁-C₆-Alkansulfonyloxy, C₆-C₁₀-Arylsulfonyloxy, C₁-C₆-Alkanoylamino, C₆-C₁₀-Aroylamino, C₁-C₆-Alkylsulfonylamino oder C₆-C₁₀-Arylsulfonylamino.

Verbindungen der Formel (VI) können beispielsweise erhalten werden, indem man 2-Amino-1,3,4-thiadiazole der Formel (III) diazotiert und auf ein Benzolderivat der Formel (VIII) 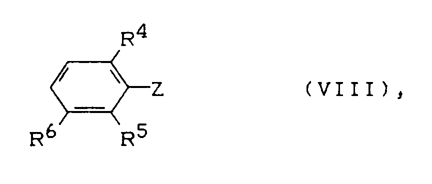 in der
- R⁴ bis R⁶: die bei Formel (I) angegebene allgemeine, bevorzugte und besonders bevorzugte Bedeutung haben und
- Z: die bei Formel (VI) angegebene allgemeine und bevorzugte Bedeutung haben,
kuppelt, und gegebenenfalls, wenn Z für Hydroxy oder Amino steht, mit C₁-C₆-aliphatischen oder C₆-C₁₀-aromatischen Carbonsäureanhydriden oder -chloriden oder -sulfonsäurechloriden acyliert oder mit entsprechenden Sulfonsäurechloriden sulfonyliert.
und dann mit Verbindungen der Formel (V) quaterniert.

Die erwähnten Diazotierungen können in an sich bekannter Weise durchgeführt werden, beispielsweise mit Nitrosylschwefelsäure in 80 bis 90 Gew.-%iger Phosphorsäure oder in Gemischen solcher Phosphorsäuren mit Essigsäure, Propionsäure und/oder Schwefelsäure oder mit Natriumnitrit in wäßriger Mineralsäure, z.B. Salzsäure.

Die erwähnten Kupplungen können ebenfalls auf an sich bekannte Weise durchgeführt werden, beispielsweise in einem sauren Medium, das wäßrig oder wäßrig-organisch sein kann.

Die Diazotierungen und Kupplungen können auch nach anderen an sich bekannten Verfahren simultan durchgeführt werden, beispielsweise indem man Verbindungen der Formel (III) und Verbindungen der Formel (IV) gemeinsam in einem sauren Medium mit beispielsweise Natriumnitrit umsetzt. Als saure Medien sind z.B. wäßrige Mineralsäuren oder organische Säuren oder Mischungen davon geeignet, wobei als Mineralsäuren z.B. Salzsäure, Schwefelsäure oder Phosphorsäure und als organische Säuren z.B. Ameisensäure, Essigsäure oder Propionsäure in Frage kommen. Auch unter Druck verflüssigtes Kohlendioxid kann als saures Medium dienen.

Als quaternierende Mittel kommen solche der Formel (V) infrage und solche, die unter Reaktionsbedingungen formal Verbindungen der Formel (V) ergeben. Beispiele sind Alkylhalogenide, Halogenacetamide, β-Halogenpropionitrile, Halogenhydrine, Alkylenoxide, Alkylester der Schwefelsäure, Alkylester organischer Sulfonsäuren, Nitrile, Amide und Ester von α,β-ungesättigten Carbonsäuren, Alkoxyalkylhalogenide und Vinylpyridine. Als Beispiele seien genannt: Methylchlorid, Methylbromid, Methyliodid, Benzylchlorid, Benzylbromid, Chloracetamid, β-Chlorpropionitril, Ethylenchlorhydrin, Dimethylsulfat, Diethylsulfat, Benzolsulfonsäuremethylester, Benzolsulfonsäureethylester, Toluolsulfonsäuremethylester, Toluolsulfonsäureethylester, Toluolsulfonsäurepropylester, Allylchlorid, Allylbromid, Ethylenoxid, Propylenoxid, Acrylnitril, Acrylsäure, Acrylamid, Acrylsäuremethylester, 2- und 4-Vinylpyridin, Sulfolen (= 1,1-Dioxo-2,5-dihydrothiophen), Epichlorhydrin, Styroloxid, Methylphosphonsäuredimethylester und Allylphosphorsäureester.

Die erwähnten Quaternierungen können z.B. in einem indifferenten organischen Lösungsmittel, in Wasser oder in Mischungen davon erfolgen, wobei gegebenenfalls säurebindende Mittel, wie Magnesiumoxid, Natriumcarbonat, Natriumhydrogencarbonat, Calciumcarbonat oder Natriumacetat, zugesetzt werden können. Geeignete organische Lösungsmittel sind beispielsweise Kohlenwasserstoffe, Chlorkohlenwasserstoffe, Nitrokohlenwasserstoffe, Nitrile, Amide, Carbonsäuren, Carbonsäureanhydride, Ketone und Dialkylsulfoxide, wie Benzol, Toluol, Tetrachlorethan, Mono- und Dichlorbenzol, Nitrobenzol, Acetonitril, Propionitril, Dimethylformamid, N-Methylpyrrolidon, Essigsäure, Propionsäure, Milchsäure, Acetanhydrid, Aceton, Butanon und Dimethylsulfoxid. Die Umsetzung der Farbstoffe der Formel (VI) mit Aminen der Formel (VII) kann ebenfalls in organischen Lösungsmitteln, in Wasser oder in Mischungen davon erfolgen. Geeignete Lösungsmittel sind die oben beschriebenen. Die Umsetzung kann gegebenenfalls mit einem Überschuß des Amins der Formel (VII) bei Temperaturen von z.B. zwischen 0 und 100°C, vorzugsweise solchen zwischen 10 und 50°C durchgeführt werden.

Die entstehenden Farbstoffe der Formel (I) fallen entweder aus den Lösungsmitteln direkt aus und können z.B. durch Abfiltrieren isoliert werden oder man kann sie bei der Verwendung von mit Wasser mischbaren Lösungsmitteln als feste, abfiltrierbare Produkte erhalten durch Verdünnen mit Wasser und Zugabe wasserlöslicher Salze wie Natrium- oder Kaliumchlorid, gegebenenfalls in Gegenwart von Zinkchlorid oder Eisenchlorid.

Die erfindungsgemäßen Farbstoffe der Formel (I) eignen sich hervorragend zum Färben und Bedrucken von kationisch färbbaren Fasern, vorzugsweise von Polymerisaten und Mischpolymerisaten des Acrylnitrils und Dicyanoethylens, sowie von sauer modifizierten Fasern aus Polyamid und Polyester, wobei echte Farbtöne erhalten werden. Die Farbstoffe können auch Verwendung finden zum Färben und Bedrucken von tannierten Zellulosematerialien, Papier, Seide und Leder. Sie sind weiter geeignet zur Herstellung von Schreibflüssigkeiten, Stempelflüssigkeiten, Kugelschreiberpasten und ink-jet-Tinten und lassen sich auch im Gummidruck verwenden.

Das Färben von beispielsweise Polymerisaten und Mischpolymerisaten des Acrylnitrils kann z.B. aus schwach saurer Flotte erfolgen, wobei man in das Färbebad vorzugsweise bei 40 bis 60°C eingeht und dann bei Kochtemperatur färbt. Man kann auch unter Druck bei Temperaturen über 100°C färben. Des weiteren lassen sich mit den erfindungsgemäßen Farbstoffen Spinnlösungen zum Färben polyacrylnitrilhaltiger Fasern herstellen. Die erfindungsgemäßen Farbstoffe weisen eine gute Stabilität im Färbebad auf.

Die Färbungen der erfindungsgemäßen Farbstoffe der Formel (I) auf Materialien aus Polyacrylnitril zeichnen sich durch sehr gute Licht-, Naß- und Reibechtheiten und durch eine hohe Affinität zur Faser auf.

Erfindungsgemäße Farbstoffe können einzeln, in Mischungen untereinander oder in Mischungen mit anderen Farbstoffen angewendet werden.

Die vorliegende Erfindung betrifft schließlich auch kationisch färbbare Fasern, tannierte Zellulosematerialien, Papier, Seide, Leder, Kugelschreiberpasten, Schreibflüssigkeiten, Stempelflüssigkeiten und ink-jet-Tinten, die dadurch gekennzeichnet sind, daß sie mindestens einen kationischen Thiadiazoldiphenylaminfarbstoff der Formel (I) enthalten.

Die erfindungsgemäßen Farbstoffe der Formel (I) besitzen eine geringe Toxizität, besonders gegenüber Fischen und Daphnien.

### Beispiele

### Beispiel 1

Zu einer Lösung von 46,3 g N-Methyl-diphenylamin und 52,2 g 2-Amino-5-diisopropylamino-1,3,4-thiadiazol in 250 ml Eisessig wurde während 4 h bei 25°C eine Lösung von 17,25 g Natriumnitrit in 30 ml Wasser zugetropft. Nach 2 h Rühren wurde abgesaugt, mit 50 Gew.-%iger Essigsäure und Wasser gewaschen und getrocknet. So wurde 89,7 g eines Farbstoffs der Formel 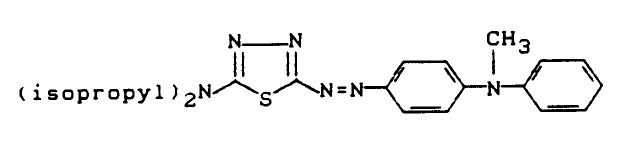 erhalten.

15,8 g dieses Farbstoffs wurden in 80 ml Eisessig und 4 ml 37 Gew.-%iger Salzsäure gelöst. 2,8 g Acrylamid wurden zugesetzt und das Gemisch 2 h lang bei 90 bis 95°C gerührt. Danach wurden wieder 2,8 g Acrylamid umgesetzt und bei 90 bis 95°C gerührt. Diese Art der Acrylamidzugabe wurde solange wiederholt, bis insgesamt 11,2 g Acrylamid eingetragen worden waren. Dann wurde das Gemisch auf 700 ml Wasser ausgetragen und filtriert. Zum Filtrat wurden 100 ml einer 2-molaren Zinkchlorid-Lösung in Wasser gegeben, mit einer 15 Gew.-%igen wäßrigen Natriumchlorid-Lösung ausgesalzen, abgesaugt und getrocknet. Es wurden 15,2 g (68 % der Theorie) eines Farbstoffs der Formel (I) mit R¹ = R² = Isopropyl, R³ = CH₂CH₂CONH₂, R⁴ = R⁵ = R⁶ = R⁸ = R⁹ = Wasserstoff, R⁷ = Methyl und X^{⊖} = 1/2 ZnCl₄²⁻.

Der Farbstoff besaß ein Absorptionsmaximum in 10%iger Essigsäure bei 604 nm und färbte Polyacrylnitril in einem lichtechten blauen Farbton.

### Beispiel 2

a) In eine Mischung aus 115 ml 30 %iger Natriumnitritlösung, 1 l Eis und 250 ml Wasser wurde bei 0°C eine Lösung aus 51 g 2-Amino-5-diispropylamino-1,3,4-thiadiazol in 250 ml Wasser und 225 ml konz. Salzsäure, die mit 1 l Eis gemischt wurde, zügig eingegossen.
b) 64,8 g 2,5-Dimethylphenol wurden in 1,5 l Methanol gelöst und mit 50 ml 10 %iger Amidosulfonsäurelösung in Wasser versetzt. Durch Einwerfen von Eis wurde auf 5°C gekühlt, dann der Diazotieransatz aus a) langsam dazu geschüttet und 2 l Wasser zugesetzt. Man rührte die Suspension über Nacht, saugte ab und wusch mit Wasser neutral. Trocknen bei 40°C im Vakuum ergab 161 g des Farbstoffs der Formel 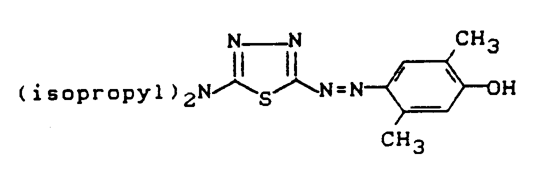
c) 16,7 g dieses Farbstoffs wurden in einer Mischung aus 50 ml Wasser, 9,6 g Triisopropanolamin und 8 ml 30 %iger Natronlauge bei 0°C vorgelegt und 13,3 g Benzolsulfochlorid während 2 h zugetropft. Nach Rühren über Nacht wurde abgesaugt, mit Wasser gewaschen und bei 40°C im Vakuum getrocknet. Man erhielt 23,7 g des Farbstoffs der Formel 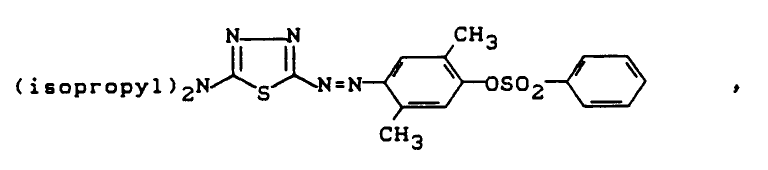 der als Rohprodukt weiter umgesetzt wurde.
d) 23,7 g dieses Farbstoffs wurden in einer Mischung aus 80 ml Eisessig, 18 ml Acetanhydrid und 8 g Triisopropanolamin mit 18,9 g Dimethylsulfat 5 h bei 40°C gerührt. Dann wurde auf 500 ml Methanol ausgegossen und mit einer Lösung von 10 ml Perchlorsäure in 200 ml Methanol versetzt. Nach Absaugen, Waschen mit Methanol und Trocknen bei 40°C im Vakuum erhielt man 15,4 g des Farbstoffs der Formel 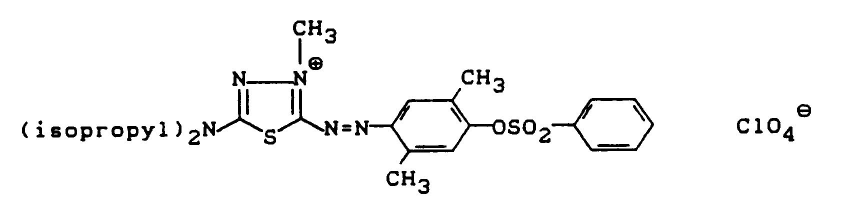
e) 12 g dieses Farbstoffs wurden in 200 ml Methanol mit 4,1 g Anilin über Nacht bei Raumtemperatur gerührt. 10 ml 30 %ige wäßrige Natronlauge wurden zugesetzt und die Anhydrobase der Formel (II) mit R¹ = R² = Isopropyl, R³ = R⁴ = R⁶ = Methyl, R⁵ = R⁸ = R⁹ = Wasserstoff abgesaugt, mit Methanol und Wasser gewaschen und bei 40°C im Vakuum getrocknet. Die Ausbeute betrug 7,2 g
   Das Lösen in wäßriger Essigsäure ergab den Farbstoff der Formel (I) mit R¹ = R² = Isopropyl, R³ = R⁴ = R⁶ = Methyl, R⁵ = R⁷ = R⁸ = R⁹ = Wasserstoff und X⁻ = Acetat. Dieser hatte λₘₐₓ = 600 nm und färbte Polyacrylnitril in einem etwas rotstichigen Blau mit guter Lichtechtheit`

### Beispiel 3 (nicht beansprucht)

a-c) Die Stufen a) bis c) des Beispiels 2 wurden wiederholt, jedoch wurden in Stufe b) statt 2,5-Dimethylaminophenol 75,6 g 1-Hydroxynaphthalin eingesetzt. Man erhielt in Stufe c) den Farbstoff der Formel 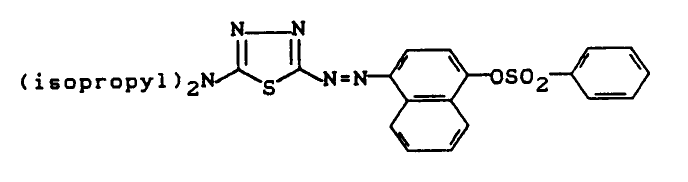
d) 10,2 g dieses Farbstoffs wurden in einer Mischung aus 40 ml Eisessig, 10 ml Acetanhydrid und 3,8 g Triisopropanolamin mit 7,9 g Dimethylsulfat 2,5 h bei 50°C gerührt. Die Mischung wurde auf 100 g Eis und 100 ml Wasser gegossen. 5 g Zinkchlorid und 5 g Natriumchlorid wurden zugesetzt. Es wurde abgesaugt, mit einer Mischung aus Methanol und Eiswasser gewaschen und bei 40°C im Vakuum getrocknet. Man erhielt 12,6 g des Farbstoffs der Formel 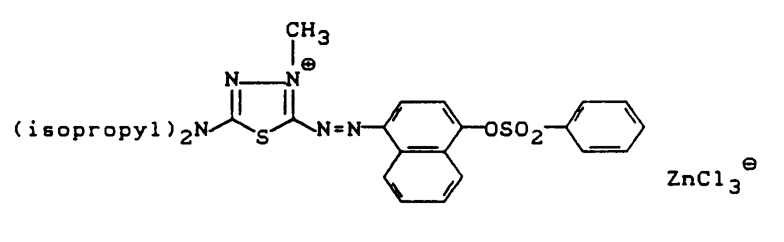
e) 12,5 g dieses Farbstoffs wurden in 300 ml Methanol mit 6,7 g o-Anisidin versetzt und über Nacht bei Raumtemperatur gerührt. Es wurde abgesaugt, mit Methanol und Wasser gewaschen und bei 40°C im Vakuum getrocknet. Man erhielt 8,3 g des Farbstoffs der Formel (I) mit R¹ = R² = Isopropyl, R³ = Methyl, R⁵ und R⁶ gemeinsam = -CH=CH-CH=CH-, R⁹ = Methoxy, R⁴ = R⁷ = R⁸ = Wasserstoff und X⁻ = ZnCl₃⁻.
   Er hat λₘₐₓ = 643 nm und färbt Polyacrylnitril in einem grünstichigen Blau.

Analog den Beispielen 1 bis 3 wurden die in der folgenden Tabelle zusammengestellten Farbstoffe erhalten. Die Farbstoffe entsprachen der Formel (I), wobei die Substituenten die jeweils angegebene Bedeutung hatten.

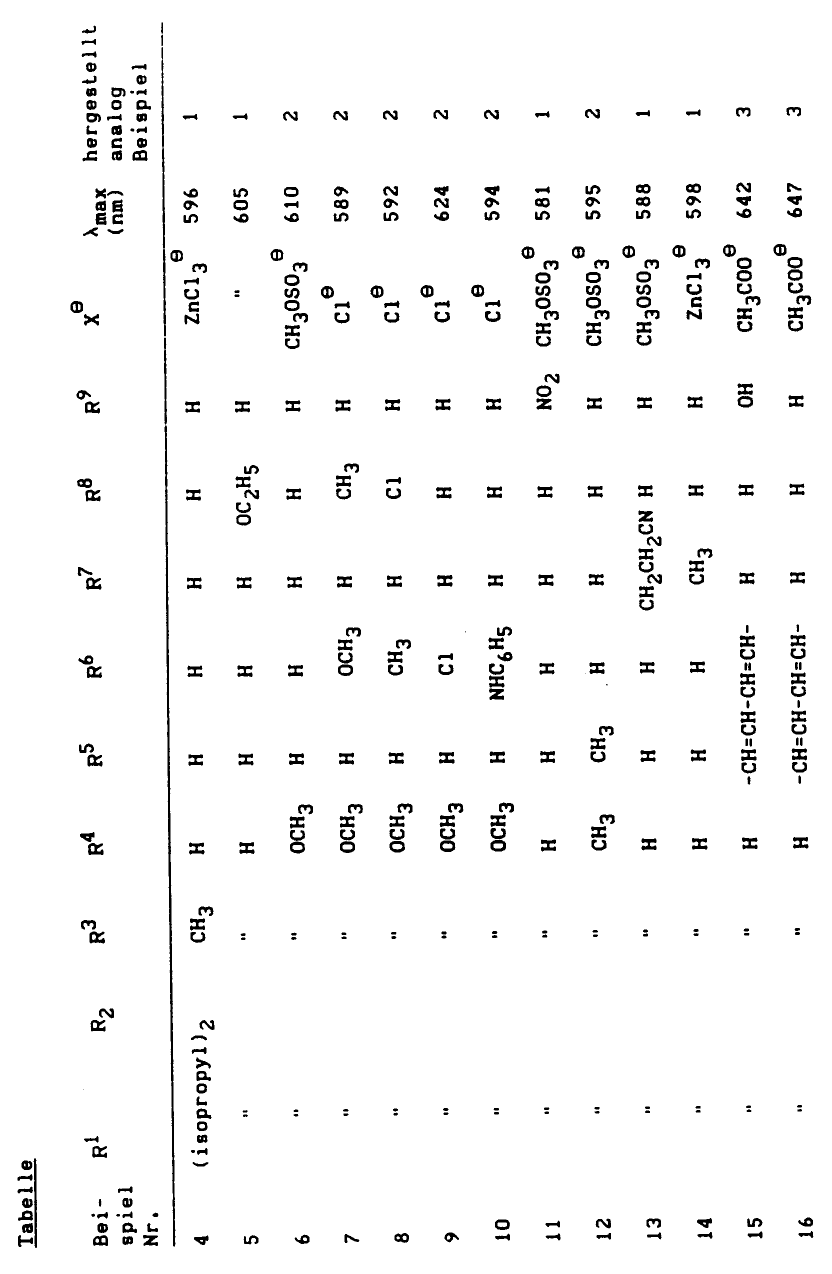

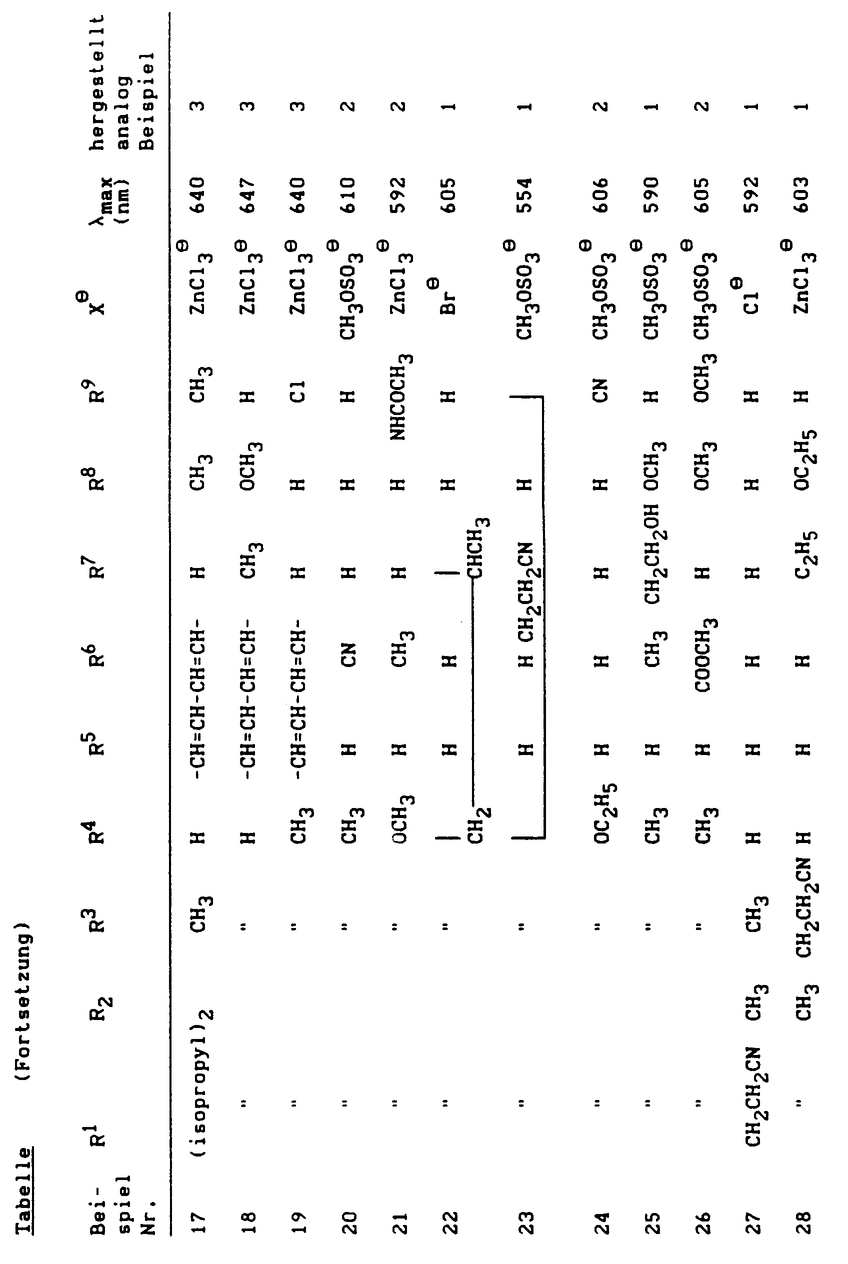

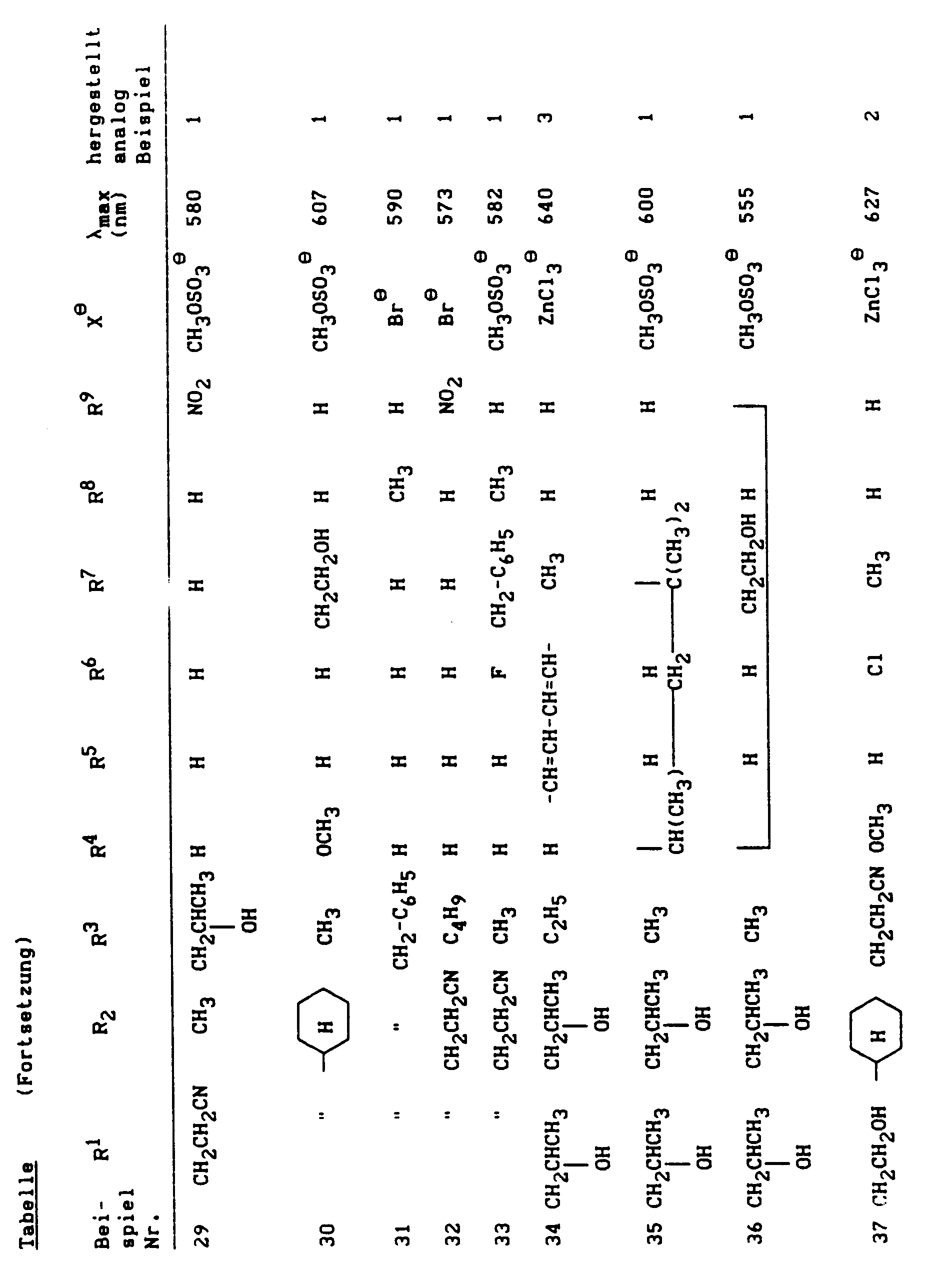

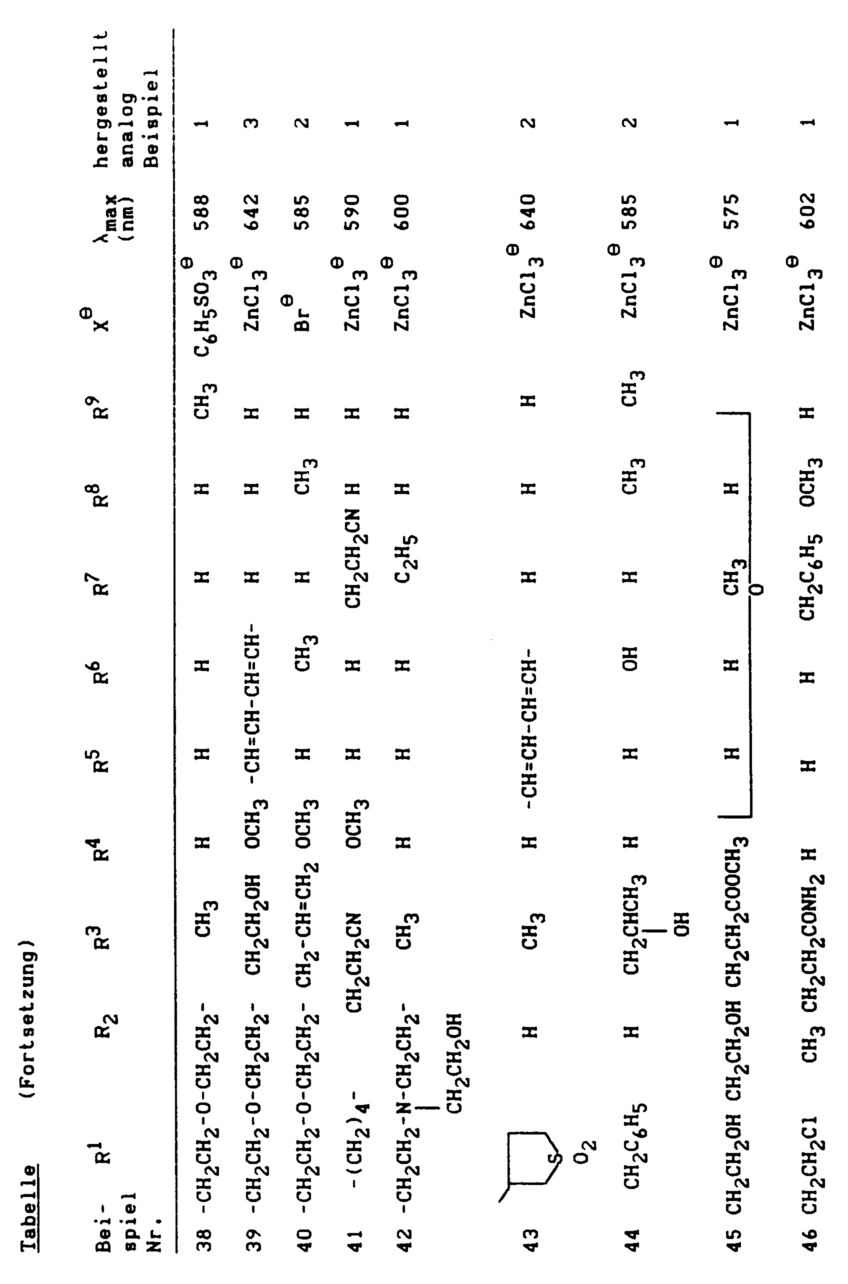

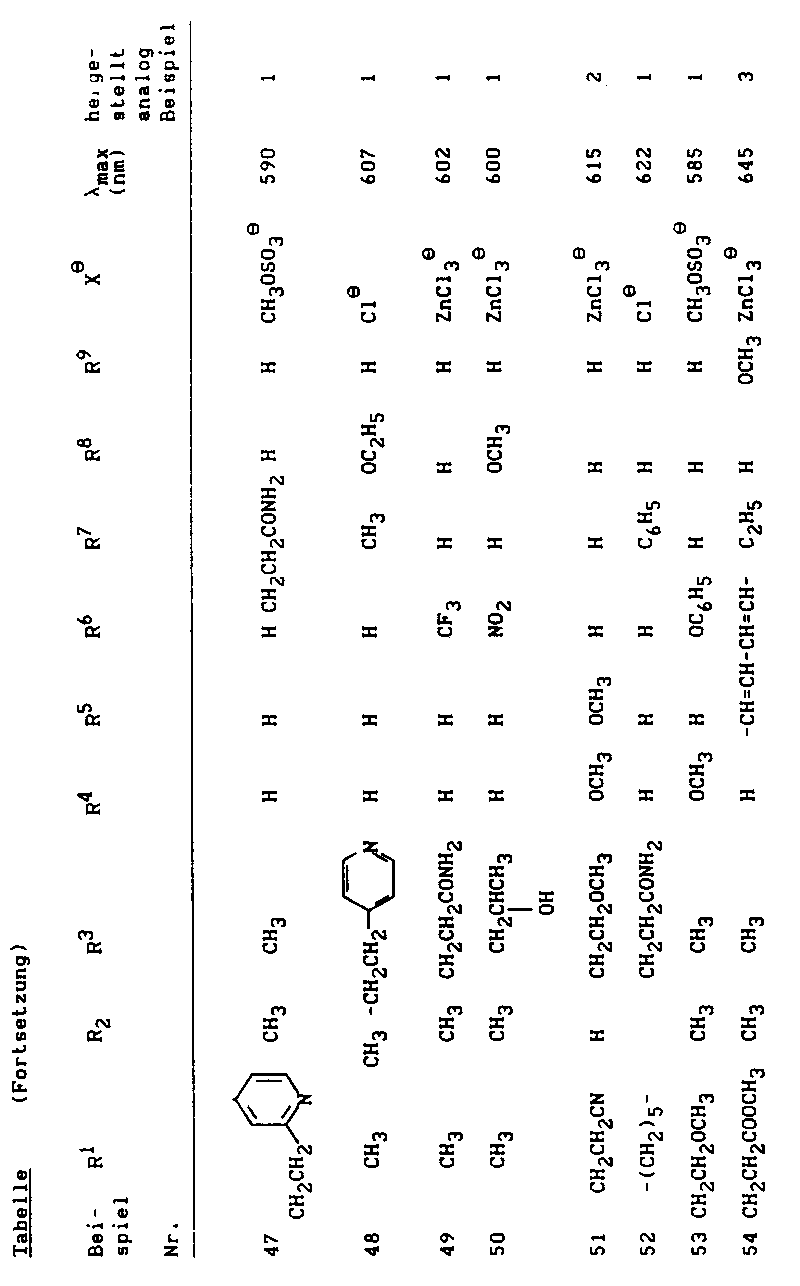

### Beispiel 55

### Färbeverfahren für Polyacrylnitril

0,1 g des gemäß Beispiel 8 erhaltenen Farbstoffs wurden mit 2 ml Wasser unter Zusatz von wenig Essigsäure angeteigt und mit 50 ml heißem Wasser gelöst. Dann wurden 1,2 g eines Kondensationsprodukts aus Naphthalinsulfonsäure und Formaldehyd zugesetzt und mit kaltem Wasser auf 500 ml aufgefüllt.

Der pH-Wert dieser Färbeflotte wurde mit Essigsäure und Natriumacetat auf 4,5 - 5 eingestellt. In dieser Färbeflotte wurden 10 g Stückware aus Polyacrylnitrilfasern ständig in Bewegung gehalten, während in 30 min die Temperatur auf 100°C erhöht wurde. Bei Kochtemperatur wurde 60 min gefärbt, dann das Material mit kaltem Wasser gespült und bei 60-70°C getrocknet. Das Material war dann intensiv rotstichig blau gefärbt.

### Beispiel 56

### Färbeverfahren für holzschliffhaltiges Papier

Ein aus 60 % Holzschliff und 40 % ungebleichtem Sulfitzellstoff bestehender Trockenstoff wurde im Holländer mit soviel Wasser angeschlagen und bis zum Mahlgrad 40° SR gemahlen, daß der Trockengehalt etwas über 2,5 % lag. Anschließend wurde mit Wasser exakt 2,5 % Trockengehalt des Dickstoffs eingestellt. 200 g dieses Dickstoffs wurden mit 5 g einer 0,5 gew.-%igen wäßrigen Lösung des Farbstoffs des Beispiels 4 versetzt, 5 min verrührt, 2 % Harzleim und 4 % Alaun, bezogen auf Trockenstoff, hinzugegeben und wiederum einige Minuten homogen verrührt. Dann wurde die Masse mit Wasser auf 700 ml verdünnt und hieraus in bekannter Weise durch Absaugen über einem Blattbildner Papierblätter hergestellt. Sie wiesen eine intensive blaue Färbung auf.

Analog den Beispielen 55 und 56 können auch die anderen Farbstoffe der Beispiele 1 bis 54 zum Färben eingesetzt werden.

## Patentansprüche

1. Kationische Thiadiazoldiphenylaminfarbstoffe der Formel (I) 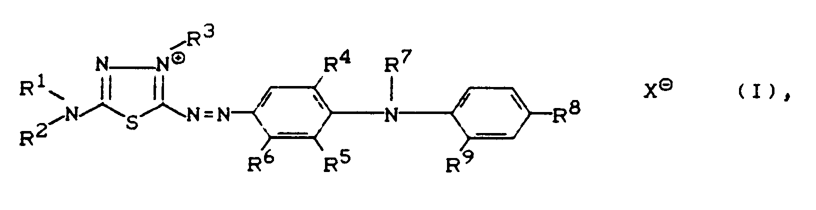 in der
R¹ und R² unabhängig voneinander Wasserstoff, Alkyl, Alkenyl, Cycloalkyl, Aralkyl oder einen gegebenenfalls über eine Methylen- oder Ethylenbrücke gebundenen Heterocyclus bedeuten, wobei R¹ und R² gemeinsam mit dem dazwischenliegenden Stickstoffatom auch einen Heterocyclus bilden können,
R³ Alkyl, Alkenyl, Cycloalkyl oder Aralkyl bedeutet,
R⁴ und R⁵ unabhängig voneinander Wasserstoff, Alkyl, Alkoxy oder Halogen bedeuten,
R⁶ Wasserstoff, Alkyl, Alkoxy, Aryloxy, Arylamino, Halogen, Cyano, Alkoxycarbonyl oder Nitro bedeutet, wobei
R⁵ und R⁶ gemeinsam auch eine -CH=CH-CH=CH-Brücke bilden können,
R⁷ Wasserstoff, Alkyl, Cycloalkyl, Alkenyl, Aralkyl oder Aryl bedeutet,
R⁸ und R⁹ unabhängig voneinander Wasserstoff, Alkyl, Alkoxy, Aryloxy, Halogen, Cyano, Alkoxycarbonyl, Nitro oder Acylamino bedeuten,
wobei
R⁴ mit R⁷ auch eine 2- oder 3-gliedrige Kohlenstoffbrücke bilden kann, die gegebenenfalls mit 1 bis 3 Alkylgruppen substituiert sein kann oder
wobei
R⁴ mit R⁹ auch eine direkte Bindung oder eine Sauerstoffbrücke bilden kann und
X^{⊖} ein Anion bedeutet,
wobei alle vorhandenen Alkyl-, Alkenyl-, Cycloalkyl-, Aralkyl-, Aryl-, Alkoxy- und heterocyclischen Reste gegebenenfalls mit nichtionogenen Substituenten, Carboxylgruppen, Ammoniumgruppen und/oder Pyridiniumgruppen substituiert sein können.

2. Kationische Thiadiazoldiphenylaminfarbstoffe nach Anspruch 1, dadurch gekennzeichnet, daß wenigstens einer der Reste R⁴, R⁵, R⁶, R⁸ und R⁹ von Wasserstoff verschieden ist oder R⁵ und R⁶ gemeinsam eine -CH=CH-CH=CH-Brücke bilden.

3. Kationische Thiadiazoldiphenylaminfarbstoffe nach Ansprüchen 1 und 2, dadurch gekennzeichnet, daß in Formel (I)
R¹ und R² unabhängig je einen gegebenenfalls durch Hydroxy, Halogen, Cyano, C₁-C₄-Alkoxy, Aminocarbonyl und/oder C₁-C₄-Alkoxycarbonyl substituierten C₁-C₈-Alkylrest, Allyl, Cyclopentyl, Cyclohexyl, einen gegebenenfalls durch Halogen, Cyano, C₁-C₄-Alkyl und/oder C₁-C₄-Alkoxy substituierten Benzyl- oder Phenethylrest, Tetramethylensulfonylrest, Tetrahydrofurylmethyl-, Pyridylmethyl-oder Pyridylethylrest bedeuten, wobei R² auch Wasserstoff bedeuten kann, oder
R¹ und R² gemeinsam mit dem dazwischenliegenden Stickstoffatom einen gegebenenfalls durch bis zu 4 Methylgruppen substituierten Pyrrolidino-, Piperidino- oder Morpholinorest oder einen gegebenenfalls am Stickstoff durch Methyl, Ethyl, Hydroxyethyl oder Aminoethyl substituierten Piperazinorest bedeuten,
R³ gegebenenfalls durch Hydroxy, Halogen, Cyano, C₁-C₄-Alkoxy, Aminocarbonyl und/oder C₁-C₄-Alkoxycarbonyl substituiertes C₁-C₄-Alkyl, Allyl oder einen gegebenenfalls durch Halogen, C₁-C₄-Alkyl und/oder C₁-C₄-Alkoxy substituierten Benzyl- oder Phenethylrest bedeutet,
R⁴ und R⁵ unabhängig voneinander Wasserstoff, C₁-C₄-Alkyl, C₁-C₄-Alkoxy oder Halogen bedeuten,
R⁶ Wasserstoff, C₁-C₄-Alkyl, C₁-C₄-Alkoxy, C₆-C₁₀-Aryloxy, C₆-C₁₀-Arylamino, Halogen, Cyano, C₁-C₄-Alkoxycarbonyl oder Nitro bedeutet, wobei
R⁵ und R⁶ gemeinsam auch eine -CH=CH-CH=CH-Brücke bilden können,
R⁷ Wasserstoff, gegebenenfalls durch Hydroxy, Halogen, Cyano, C₁-C₄-Alkoxy, Aminocarbonyl und/oder C₁-C₄-Alkoxycarbonyl substituiertes C₁-C₄-Alkyl, Allyl, Cyclopentyl, Cyclohexyl oder einen gegebenenfalls durch Halogen, C₁-C₄-Alkyl und/oder C₁-C₄-Alkoxy substituierten Benzyl-, Phenethyl- oder Phenylrest bedeutet,
R⁸ und R⁹ unabhängig voneinander Wasserstoff, gegebenenfalls durch Hydroxy, Halogen, Cyano oder C₁-C₄-Alkoxy substituiertes C₁-C₄-Alkyl, C₁-C₄-Alkoxy, C₆-C₁₀-Aryloxy, Halogen, Cyano, C₁-C₄-Alkoxycarbonyl, Nitro oder C₁-C₄-Alkanoylamino bedeuten, wobei
R⁴ mit R⁷ auch eine 2- oder 3-gliedrige Kohlenstoffbrücke bedeuten, die gegebenenfalls mit 1 bis 3 Methyl-und/oder Ethylgruppen substituiert sein kann oder
wobei
R⁴ mit R⁹ auch eine direkte Bindung oder eine Sauerstoffbrücke bilden kann und
X^{⊖} ein Anion bedeutet.

4. Kationische Thiadiazoldiphenylaminfarbstoffe nach Ansprüchen 1 bis 3, dadurch gekennzeichnet, daß in der Formel (I)
R¹ und R² unabhängig voneinander Methyl, Ethyl, Propyl, Butyl, Methylpropyl, Pentyl, Methylbutyl, Dimethylpropyl, Hexyl, Hydroxyethyl, Hydroxypropyl, Chlorethyl, Cyanomethyl, Cyanoethyl, Cyanopropyl, Methoxyethyl, Ethoxyethyl, Methoxypropyl, Aminocarbonylmethyl, Aminocarbonylethyl, Methoxycarbonylmethyl, Methoxycarbonylethyl, Allyl, Cyclohexyl, Benzyl, Phenethyl, Methylbenzyl, Chlorbenzyl, Methoxybenzyl, Tetramethylensulfon-3-yl, Furfuryl, 2-oder 4-Pyridylmethyl oder 2- oder 4-Pyridylethyl bedeuten und R² auch Wasserstoff bedeuten kann oder
R¹ und R² gemeinsam mit dem dazwischenliegenden Stickstoffatom Pyrrolidino, Piperidino, gegebenenfalls am Stickstoff durch Methyl, Ethyl, Hydroxyethyl oder Aminoethyl substituiertes Piperazino oder Morpholino bedeuten,
R³ Methyl, Ethyl, Propyl, Butyl, Hydroxyethyl, Hydroxypropyl, Hydroxybutyl, Chlorethyl, Cyanomethyl, Cyanoethyl, Cyanopropyl, Methoxyethyl, Ethoxyethyl, Methoxypropyl, Aminocarbonylethyl, Methoxycarbonylethyl, Ethoxycarbonylethyl, Allyl, Benzyl, Phenethyl, Methylbenzyl, Chlorbenzyl oder Methoxybenzyl bedeutet,
R⁴ und R⁵ unabhängig voneinander Wasserstoff, Methyl, Ethyl, Methoxy, Ethoxy oder Chlor bedeuten,
R⁶ Wasserstoff, Methyl, Ethyl, Methoxy, Ethoxy, Phenoxy, Anilino, Fluor, Chlor, Brom, Cyano, Methoxycarbonyl, Ethoxycarbonyl oder Nitro bedeutet, wobei
R⁵ und R⁶ gemeinsam auch eine -CH=CH-CH=CH-Brücke bilden können,
R⁷ Wasserstoff, Methyl, Ethyl, Propyl, Butyl, Hydroxyethyl, Hydroxypropyl, Chlorethyl, Cyanomethyl, Cyanoethyl, Cyanopropyl, Methoxyethyl, Ethoxyethyl, Aminocarbonylethyl, Methoxycarbonylethyl, Ethoxycarbonylethyl, Allyl, Benzyl, Phenethyl, Methylbenzyl, Phenyl, Chlorphenyl, Methylphenyl oder Methoxyphenyl bedeutet,
R⁸ und R⁹ unabhängig voneinander Wasserstoff, Methyl, Ethyl, Methoxy, Ethoxy, Phenoxy, Chlor, Cyano, Methoxycarbonyl, Nitro, Acetylamino oder Propionylamino bedeuten oder
R⁴ mit R⁷ eine -CH₂-CH₂-, -CH₂-CH₂-CH₂-, -CH₂-CH(CH₃)- oder -CH(CH₃)-CH₂-C(CH₃)₂-Brücke bedeuten oder
R⁴ mit R⁹ eine direkte Bindung oder eine Sauerstoffbrücke bedeuten und
X^{⊖} ein Anion bedeutet.

5. Kationische Thiadiazoldiphenylaminfarbstoffe nach Ansprüchen 1 bis 4, dadurch gekennzeichnet, daß in Formel (I)
R¹ und R² unabhängig voneinander Methyl, Ethyl, Propyl, Butyl, Hydroxyethyl, Hydroxypropyl, Cyanoethyl, Methoxyethyl oder Ethoxyethyl bedeuten oder
R¹ und R² gemeinsam mit dem dazwischenliegenden Stickstoffatom Morpholino bedeuten,
R³ Methyl, Ethyl, Hydroxyethyl, Hydroxypropyl oder Cyanoethyl bedeutet,
R⁴ Methyl, Methoxy, Ethoxy oder Chlor bedeutet,
R⁵ Wasserstoff bedeutet,
R⁶ Wasserstoff, Methyl, Chlor, Methoxy oder Cyano bedeutet oder
R⁵ und R⁶ gemeinsam eine -CH=CH-CH=CH-Brücke bilden,
R⁷ Wasserstoff, Methyl, Hydroxyethyl, Hydroxypropyl, Cyanoethyl bedeutet,
R⁸ und R⁹ unabhängig voneinander Wasserstoff, Methyl, Methoxy, Chlor, Cyano, Nitro oder Acetylamino bedeuten und
X^{⊖} ein Anion bedeutet.

6. Kationische Thiadiazoldiphenylaminfarbstoffe nach Ansprüchen 1 bis 5, dadurch gekennzeichnet, daß in Formel (I)
R⁷ Wasserstoff bedeutet und alle anderen Reste die in Anspruch 5 angegebene Bedeutung haben.

7. Anhydrobasen der Formel (II) 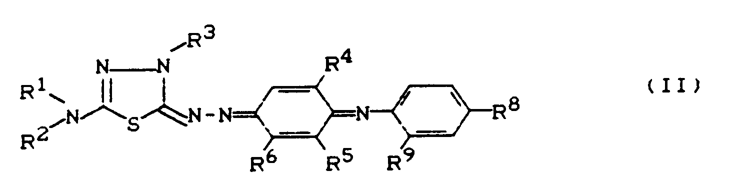 in der R¹ bis R⁶, R⁸ und R⁹ die im Anspruch 1 angegebene Bedeutung haben.

8. Verfahren zur Herstellung von kationischen Thiadiazoldiphenylaminfarbstoffen des Anspruchs 1,
dadurch gekennzeichnet, daß man 2-Amino-1,3,4-thiadiazole der Formel (III) 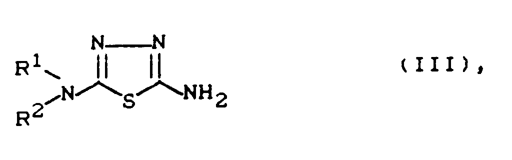 in der
R¹ und R² die im Anspruch 1 angegebene Bedeutung haben, diazotiert,
auf Diphenylaminderivate der Formel (IV) 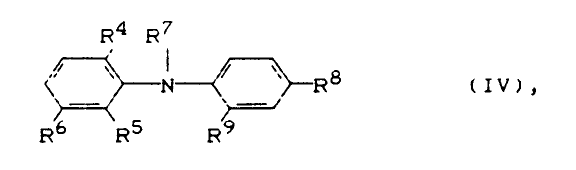 in der
R⁴ bis R⁹ die im Anspruch 1 angegebene Bedeutung haben,
kuppelt und dann mit Verbindungen der Formel (V)
R³X (V)
in der R³ und X die bei Formel (I) angegebene allgemeine, bevorzugte und besonders bevorzugte Bedeutung haben, oder Vorstufen davon
quaterniert.

9. Verfahren zur Herstellung von kationischen Thiadiazoldiphenylaminfarbstoffen des Anspruchs 1, dadurch gekennzeichnet, daß man Farbstoffe der Formel (VI) 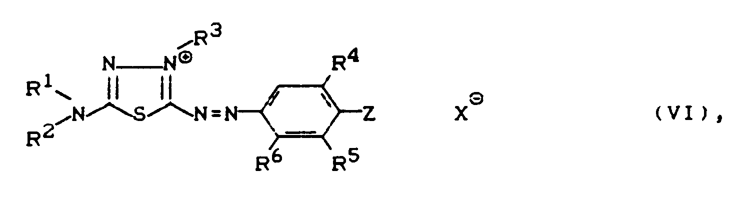 in der
R¹ bis R⁶ und X^{⊖} die im Anspruch 1 angegebene Bedeutung haben und
Z für Halogen, Hydroxy, Alkoxy, Cycloalkoxy, Aryloxy, Amino, Dialkylamino, Acyloxy oder Acylamino steht,
mit Aminen der Formel (VII) 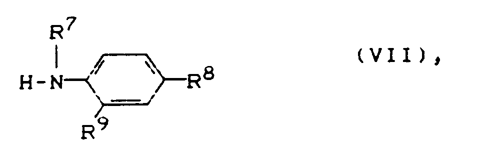 in der
R⁷ bis R⁹ die im Anspruch 1 angegebene Bedeutung haben,
umsetzt.

10. Verwendung von Farbstoffen des Anspruchs 1 zum Färben und Bedrucken von Polymerisaten und Mischpolymerisaten des Acrylnitrils und Dicyanoethylens,
sowie von sauer modifizierten Fasern aus Polyamid und Polyester und zum Färben und Bedrucken von tannierten Zellulosematerialien, Papier, Seide und Leder und zur Herstellung von Schreibflüssigkeiten, Stempelflüssigkeiten, Kugelschreiberpasten und ink-jet-Tinten und im Gummidruck.

11. Polymerisate und Mischpolymerisate des Acrylnitrils und Dicyanoethylens, sauer modifizierte Fasern aus Polyamid, tannierte Zellulosematerialien, Papier, Seide, Leder, Schreibflüssigkeiten, Stempelflüssigkeiten, Kugelschreiberpasten und ink-jet-Tinten, dadurch gekennzeichnet, daß sie mit Farbstoffen des Anspruchs 1 gefärbt sind.

## Claims

1. Cationic thiadiazolyldiphenylamine dyestuffs of the formula (I) 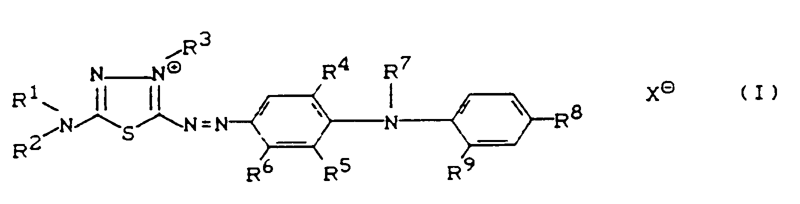 in which
R¹ and R², independently of one another, denote hydrogen, alkyl, alkenyl, cycloalkyl, aralkyl or a heterocycle which may be bound via a methylene or ethylene bridge, it also being possible for R¹ and R² together with the nitrogen atom in between to form a heterocycle,
R³ denotes alkyl, alkenyl, cycloalkyl or aralkyl,
R⁴ and R⁵, independently of one another, denote hydrogen, alkyl, alkoxy or halogen,
R⁶ denotes hydrogen, alkyl, alkoxy, aryloxy, arylamino, halogen, cyano, alkoxycarbonyl or nitro, it also being possible for
R⁵ and R⁶ together to form a -CH=CH-CH=CH- bridge,
R⁷ denotes hydrogen, alkyl, cycloalkyl, alkenyl, aralkyl or aryl,
R⁸ and R⁹, independently of one another, denote hydrogen, alkyl, alkoxy, aryloxy, halogen, cyano, alkoxycarbonyl, nitro or acylamino,
it also being possible for
R⁴ together with R⁷ to form a 2- or 3-membered carbon bridge which may be unsubstituted or substituted by 1 to 3 alkyl groups, or
it also being possible for
R⁴ together with R⁹ to form a direct bond or an oxygen bridge, and
X^{⊖} denotes an anion,
it being possible for any alkyl, alkenyl, cycloalkyl, aralkyl, aryl, alkoxy and heterocyclic radicals to be unsubstituted or substituted by non-ionic substituents, carboxyl groups, ammonium groups and/or pyridinium groups.

2. Cationic thiadiazolyldiphenylamine dyestuffs according to Claim 1, characterised in that at least one of the radicals R⁴, R⁵, R⁶, R⁸ and R⁹ is not hydrogen or R⁵ and R⁶ together form a -CH=CH-CH=CH- bridge.

3. Cationic thiadiazolyldiphenylamine dyestuffs according to Claims 1 and 2, characterised in that in formula (I)
R¹ and R², independently of one another, each denote a C₁-C₈-alkyl radical which is unsubstituted or substituted by hydroxyl, halogen, cyano, C₁-C₄-alkoxy, aminocarbonyl and/or C₁-C₄-alkoxycarbonyl, or denote allyl, cyclopentyl, cyclohexyl, a benzyl or phenethyl radical which is unsubstituted or substituted by halogen, cyano, C₁-C₄-alkyl and/or C₁-C₄-alkoxy, or denote a 1,1-dioxotetrahydrothienyl radical, tetrahydrofurylmethyl, pyridylmethyl or pyridylethyl radical, it also being possible for R² to denote hydrogen, or
R¹ and R² together with the nitrogen atom in between denote a pyrrolidino, piperidino or morpholino radical which is unsubstituted or substituted by up to 4 methyl groups or denote a piperazino radical which is unsubstituted or substituted on nitrogen by methyl, ethyl, hydroxyethyl or aminoethyl,
R³ denotes C₁-C₄-alkyl which is unsubstituted or substituted by hydroxyl, halogen, cyano, C₁-C₄-alkoxy, aminocarbonyl and/or C₁-C₄-alkoxycarbonyl, or denotes allyl or a benzyl or phenethyl radical which is unsubstituted or substituted by halogen, C₁-C₄-alkyl and/or C₁-C₄-alkoxy,
R⁴ and R⁵, independently of one another, denote hydrogen, C₁-C₄-alkyl, C₁-C₄-alkoxy or halogen,
R⁶ denotes hydrogen, C₁-C₄-alkyl, C₁-C₄-alkoxy, C₆-C₁₀-aryloxy, C₆-C₁₀-arylamino, halogen, cyano, C₁-C₄-alkoxycarbonyl or nitro, it also being possible for
R⁵ and R⁶ together to form a -CH=CH-CH=CH- bridge,
R⁷ denotes hydrogen, C₁-C₄-alkyl which is unsubstituted or substituted by hydroxyl, halogen, cyano, C₁-C₄-alkoxy, aminocarbonyl and/or C₁-C₄-alkoxycarbonyl, or denotes allyl, cyclopentyl, cyclohexyl or a benzyl, phenethyl or phenyl radical, which is unsubstituted or substituted by halogen, C₁-C₄-alkyl and/or C₁-C₄-alkoxy,
R⁸ and R⁹, independently of one another, each denote hydrogen, C₁-C₄-alkyl which is unsubstituted or substituted by hydroxyl, halogen, cyano or C₁-C₄-alkoxy, or denote C₁-C₄-alkoxy, C₆-C₁₀-aryloxy, halogen, cyano, C₁-C₄-alkoxycarbonyl, nitro or C₁-C₄-alkanoylamino, it also being possible for
R⁴ together with R⁷ to denote a 2- or 3-membered carbon bridge which may be unsubstituted or substituted by 1 to 3 methyl and/or ethyl groups, or
it also being possible for
R⁴ together with R⁹ to form a direct bond or an oxygen bridge, and
X^{⊖} denotes an anion.

4. Cationic thiadiazolyldiphenylamine dyestuffs according to Claims 1 to 3, characterised in that in formula (I)
R¹ and R², independently of one another, denote methyl, ethyl, propyl, butyl, methylpropyl, pentyl, methylbutyl, dimethylpropyl, hexyl, hydroxyethyl, hydroxypropyl, chloroethyl, cyanomethyl, cyano-ethyl, cyanopropyl, methoxyethyl, ethoxyethyl, methoxypropyl, aminocarbonylmethyl, aminocarbonylethyl, methoxycarbonylmethyl, methoxycarbonylethyl, allyl, cyclohexyl, benzyl, phenethyl, methylbenzyl, chlorobenzyl, methoxybenzyl, 1,1-dioxotetrahydrothienyl, furfuryl, 2- or 4-pyridylmethyl or 2- or 4-pyridylethyl and R² can also denote hydrogen, or
R¹ and R² together with the nitrogen atom in between denote pyrrolidino, piperidino, piperazino or morpholino which is unsubstituted or substituted on nitrogen by methyl, ethyl, hydroxyethyl or aminoethyl,
R³ denotes methyl, ethyl, propyl, butyl, hydroxyethyl, hydroxypropyl, hydroxybutyl, chloroethyl, cyanomethyl, cyanoethyl, cyanopropyl, methoxyethyl, ethoxyethyl, methoxypropyl, aminocarbonylethyl, methoxycarbonylethyl, ethoxycarbonylethyl, allyl, benzyl, phenethyl, methylbenzyl, chlorobenzyl or methoxybenzyl,
R⁴ and R⁵, independently of one another, denote hydrogen, methyl, ethyl, methoxy, ethoxy or chlorine,
R⁶ denotes hydrogen, methyl, ethyl, methoxy, ethoxy, phenoxy, anilino, fluorine, chlorine, bromine, cyano, methoxycarbonyl, ethoxycarbonyl or nitro, it also being possible for
R⁵ and R⁶ together to form a -CH=CH-CH=CH- bridge,
R⁷ denotes hydrogen, methyl, ethyl, propyl, butyl, hydroxyethyl, hydroxypropyl, chloroethyl, cyanomethyl, cyanoethyl, cyanopropyl, methoxyethyl, ethoxyethyl, aminocarbonylethyl, methoxycarbonylethyl, ethoxycarbonylethyl, allyl, benzyl, phenethyl, methylbenzyl, phenyl, chlorophenyl, methylphenyl or methoxyphenyl,
R⁸ and R⁹, independently of one another, denote hydrogen, methyl, ethyl, methoxy, ethoxy, phenoxy, chlorine, cyano, methoxycarbonyl, nitro, acetylamino or propionylamino, or
R⁴ together with R⁷ denote a -CH₂-CH₂-, -CH₂-CH₂-CH₂-, -CH₂-CH(CH₃)- or -CH(CH₃)-CH₂-C(CH₃)₂- bridge, or
R⁴ together with R⁹ denote a direct bond or an oxygen bridge, and
X^{⊖} denotes an anion.

5. Cationic thiadiazolyldiphenylamine dyestuffs according to Claims 1 to 4, characterised in that in formula (I)
R¹ and R², independently of one another, denote methyl, ethyl, propyl, butyl, hydroxyethyl, hydroxypropyl, cyanoethyl, methoxyethyl or ethoxyethyl, or
R¹ and R² together with the nitrogen atom in between denote morpholino,
R³ denotes methyl, ethyl, hydroxyethyl, hydroxypropyl or cyanoethyl,
R⁴ denotes methyl, methoxy, ethoxy or chlorine,
R⁵ denotes hydrogen,
R⁶ denotes hydrogen, methyl, chlorine, methoxy or cyano, or
R⁵ and R⁶ together form a -CH=CH-CH=CH- bridge,
R⁷ denotes hydrogen, methyl, hydroxyethyl, hydroxypropyl, cyanoethyl,
R⁸ and R⁹, independently of one another, denote hydrogen, methyl, methoxy, chlorine, cyano, nitro or acetylamino, and
X^{⊖} denotes an anion.

6. Cationic thiadiazolyldiphenylamine dyestuffs according to Claims 1 to 5, characterised in that in formula (I)
R⁷ denotes hydrogen and all other radicals have the meaning given in Claim 5.

7. Anhydro bases of the formula (II) 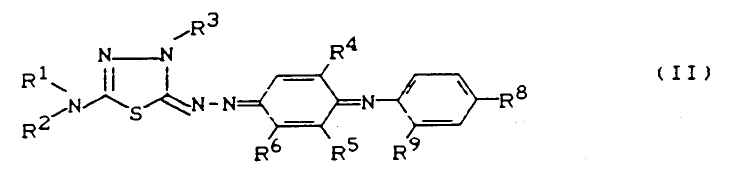 in which R¹ to R⁶, R⁸ and R⁹ have the meaning given in Claim 1.

8. Process for the preparation of cationic thiadiazolyldiphenylamine dyestuffs of Claim 1, characterised in that 2-amino-1,3,4-thiadiazoles of the formula (III) 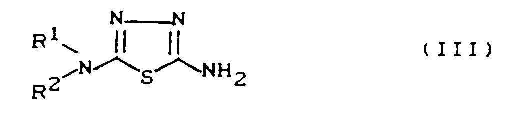 in which
R¹ and R² have the meaning given in Claim 1, are diazotised, the diazotised compounds are coupled
onto diphenylamine derivatives of the formula (IV) 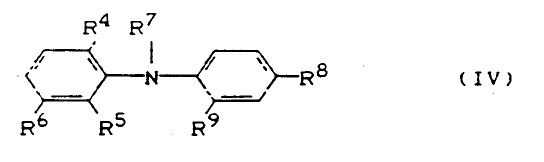 in which
R⁴ to R⁹ have the meaning given in Claim 1,
and the products are then quaternised with compounds of the formula (V)
R³X (V)
in which R³ and X have the general, preferred and particularly preferred meaning given in formula (I), or precursors thereof.

9. Process for the preparation of cationic thiadiazolyldiphenylamine dyestuffs of Claim 1, characterised in that dyestuffs of the formula (VI) 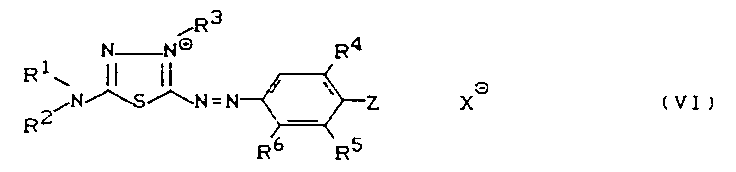 in which
R¹ to R⁶ and X^{⊖} have the meaning given in Claim 1 and
Z represents halogen, hydroxyl, alkoxy, cycloalkoxy, aryloxy, amino, dialkylamino, acyloxy or acylamino,
are reacted with amines of the formula (VII) 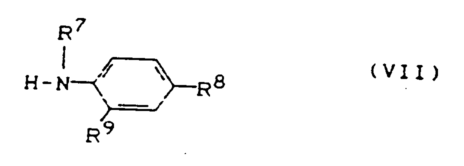 in which
R⁷ to R⁹ have the meaning given in Claim 1.

10. Use of dyestuffs of Claim 1 for the dyeing and printing of polymers and copolymers of acrylonitrile and dicyanoethylene, and of acid-modified polyamide and polyester fibres and for the dyeing and printing of tanned cellulose materials, paper, silk and leather and for the production of writing fluids, stamping fluids, ballpoint pen pastes and inks for the ink-jet process and in flexographic printing.

11. Polymers and copolymers of acrylonitrile and dicyanoethylene, acid-modified polyamide fibres, tanned cellulose materials, paper, silk, leather, writing fluids, stamping fluids, ballpoint pen pastes and inks for the ink-jet process, characterised in that they have been dyed or coloured with dyestuffs of Claim 1.

## Revendications

1. Colorants cationiques de thiadiazolediphénylamine de formule (I) 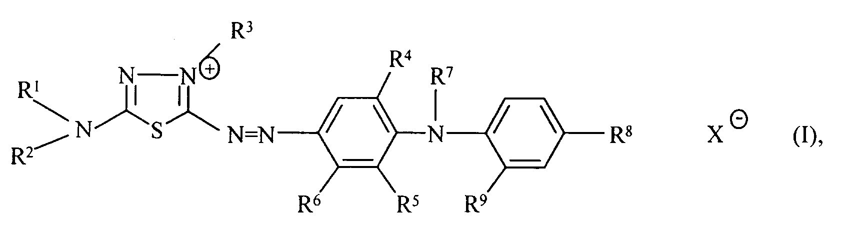 où
R¹ et R² représentent indépendamment l'un de l'autre un hydrogène, alkyle, alcényle, cycloalkyle, aralkyle ou un hétérocycle lié le cas échéant par un pont méthylène ou éthylène, où R¹ et R² avec l'atome d'azote placé entre eux peuvent former aussi un hétérocycle,
R³ représente un alkyle, alcényle, cycloalkyle ou aralkyle,
R⁴ et R⁵ représentent indépendamment l'un de l'autre un hydrogène, alkyle, alcoxy ou halogène,
R⁶ représente un hydrogène, alkyle, alcoxy, aryloxy, arylamino, halogène, cyano, alcoxycarbonyle ou nitro, où
R⁵ et R⁶ peuvent former aussi un pont -CH=CH-CH=CH-,
R⁷ représente un hydrogène, alkyle, cycloalkyle, alcényle, aralkyle ou aryle,
R⁸ et R⁹ représentent indépendamment l'un de l'autre un hydrogène, alkyle, alcoxy, aryloxy, halogène, cyano, alcoxycarbonyle, nitro ou acylamino,
où
R⁴ avec R⁷ peuvent former aussi un pont carboné à 2 ou 3 maillons qui, le cas échéant, peut être substitué par 1 à 3 groupes alkyles ou
où
R⁴ avec R⁹ peuvent former aussi une liaison directe ou un pont oxygène et
X^{⊖} représente un anion,
où tous les restes présents alkyle, alcényle, cycloalkyle, aralkyle, aryle, alcoxy- et hétérocycliques peuvent être substitués le cas échéant par des substituants non ioniques, des groupes carboxyle, des groupes ammonium et/ou des groupes pyridinium.

2. Colorants cationiques de thiadiazolediphénylamine selon la revendication 1, caractérisés en ce qu'au moins l'un des restes R⁴, R⁵, R⁶, R⁸ et R⁹ est différent de l'hydrogène ou R⁵ et R⁶ ensemble forment un pont -CH=CH-CH=CH-.

3. Colorants cationiques de thiadiazolediphénylamine selon les revendications 1 et 2, caractérisés en ce que, dans la formule (I)
R¹ et R² représentent respectivement indépendamment un reste alkyle C₁-C₈ substitué le cas échéant par un hydroxy, halogène, cyano, alcoxy C₁-C₄, aminocarbonyle et/ou alcoxy C₁-C₄, un allyle, cyclopentyle, cyclohexyle, un reste benzyle ou phénéthyle substitué le cas échéant par un halogène, cyano, alkyle C₁-C₄ et/ou alcoxy C₁-C₄, un reste tétraméthylènesulfonyle, tétrahydrofurylméthyle, pyridylméthyle ou pyridyléthyle, où R² peut représenter aussi un hydrogène, ou
R¹ et R² avec l'atome d'azote placé entre eux représentent un reste pyrrolidino, pipéridino ou morpholino substitué le cas échéant par jusqu'à 4 groupes méthyles ou un reste pipérazino substitué le cas échéant sur l'azote par un méthyle, éthyle, hydroxyéthyle ou aminoéthyle,
R³ représente un alkyle C₁-C₄ substitué le cas échéant par un hydroxy, halogène, cyano, alcoxy C₁-C₄, aminocarbonyle et/ou alcoxycarbonyle C₁-C₄, allyle ou un reste benzyle ou phénéthyle substitué le cas échéant par un halogène, alkyle C₁-C₄ et/ou alcoxy C₁-C₄,
R⁴ et R⁵ représentent indépendamment l'un de l'autre un hydrogène, alkyle C₁-C₄, alcoxy C₁-C₄ ou halogène,
R⁶ représente un hydrogène, alkyle C₁-C₄, alcoxy C₁-C₄, aryloxy C₆-C₁₀, arylamino C₆-C₁₀, halogène, cyano, alcoxycarbonyle C₁-C₄ ou nitro, où
R⁵ et R⁶ peuvent former aussi ensemble un pont -CH=CH-CH=CH-,
R⁷ représente un hydrogène, un alkyle C₁-C₄ substitué le cas échéant par un hydroxy, halogène, cyano, alcoxy C₁-C₄, aminocarbonyle et/ou alcoxycarbonyle C₁-C₄, allyle, cyclopentyle, cyclohexyle ou un reste benzyle, phénéthyle ou phényle substitué le cas échéant par un halogène, alkyle C₁-C₄ et/ou alcoxy C₁-C₄,
R⁸ et R⁹ représentent indépendamment l'un de l'autre un hydrogène, un alkyle C₁-C₄ substitué éventuellement par un hydroxyl, halogène, cyano ou alcoxy C₁-C₄, alcoxy C₁-C₄, aryloxy C₆-C₁₀, halogène, cyano, alcoxycarbonyle C₁-C₄, nitro ou alcanoylamino C₁-C₄, où
R⁴ et R⁷ représentent aussi un pont carboné à 2 ou 3 maillons, qui peuvent être substitués le cas échéant par 1 à 3 groupes méthyle et/ou éthyle ou
où
R⁴ et R⁹ peuvent former aussi une liaison directe ou un pont oxygène et
X^{⊖} représente un anion.

4. Colorants cationiques de thiadiazolediphénylamine selon les revendications 1 à 3, caractérisés en ce que, dans la formule (I)
R¹ et R² indépendamment l'un de l'autre, représentent les méthyle, éthyle, propyle, butyle, méthylpropyle, pentyle, méthylbutyle, diméthylpropyle, hexyle, hydroxyéthyle, hydroxypropyle, chloroéthyle, cyanométhyle, cyanoéthyle, cyanopropyle, méthoxyéthyle, éthoxyéthyle, méthoxypropyle, aminocarbonylméthyle, aminocarbonyléthyle, méthoxycarbonylméthyle, méthoxycarbonyléthyle, allyle, cyclohexyle, benzyle, phénéthyle, méthylbenzyle, chlorobenzyle, méthoxybenzyle, tétraméthylènesulfon-3-yle, furfuryle, 2- ou 4-pyridylméthyle ou 2- ou 4-pyridyléthyle et R² peut représenter aussi l'hydrogène ou
R¹ et R² avec l'atome d'azote placé entre eux, représentent un pyrrolidino, pipéridino, pipérazino ou morpholino substitué le cas échéant sur l'azote par un méthyle, éthyle, hydroxyéthyle ou aminoéthyle,
R³ représente les méthyle, éthyle, propyle, butyle, hydroxyéthyle, hydroxypropyle, hydroxybutyle, chloroéthyle, cyanométhyle, cyanoéthyle, cyanopropyle, méthoxyéthyle, éthoxyéthyle, méthoxypropyle, aminocarbonyléthyle, méthoxycarbonyléthyle, éthoxycarbonyléthyle, allyle, benzyle, phénéthyle, méthylbenzyle, chlorobenzyle ou méthoxybenzyle,
R⁴ et R⁵ représentent indépendamment l'un de l'autre un hydrogène, méthyle, éthyle, méthoxy, éthoxy ou chlore,
R⁶ représente un hydrogène, méthyle, éthyle, méthoxy, éthoxy, phénoxy, anilino, fluor, chlore, brome, cyano, méthoxycarbonyle, éthoxycarbonyle ou nitro, où
R⁵ et R⁶ peuvent former ensemble aussi un pont -CH=CH-CH=CH-,
R⁷ représente un hydrogène, méthyle, éthyle, propyle, butyle, hydroxyéthyle, hydroxypropyle, chloroéthyle, cyanométhyle, cyanoéthyle, cyanopropyle, méthoxyéthyle, éthoxyéthyle, aminocarbonyléthyle, méthoxycarbonyléthyle, éthoxycarbonyléthyle, allyle, benzyle, phénéthyle, méthylbenzyle, phényle, chlorophényle, méthylphényle ou méthoxyphényle,
R⁸ et R⁹ représentent indépendamment l'un de l'autre un hydrogène, méthyle, éthyle, méthoxy, éthoxy, phénoxy, chlore, cyano, méthoxycarbonyle, nitro, acétylamino ou propionylamino, ou
R⁴ avec R⁷ représentent un pont -CH₂-CH₂-, -CH₂-CH₂-CH₂-, -CH₂-CH(CH₃)- ou -CH(CH₃)-CH₂-C(CH₃)₂- ou
R⁴ avec R⁹ représentent une liaison directe ou un pont oxygène et
X^{⊖} représente un anion.

5. Colorants cationiques de thiadiazolediphénylamine selon les revendications 1 à 4, caractérisés en ce que, dans la formule (I)
R¹ et R² représentent indépendamment l'un de l'autre un méthyle, éthyle, propyle, butyle, hydroxyéthyle, hydroxypropyle, cyanoéthyle, méthoxyéthyle ou éthoxyéthyle ou
R¹ et R² représentent avec l'atome d'azote placé entre eux un morpholino,
R³ représente un méthyle, éthyle, hydroxyéthyle, hydroxypropyle ou cyanoéthyle,
R⁴ représente un méthyle, méthoxy, éthoxy ou chlore,
R⁵ représente un hydrogène,
R⁶ représente un hydrogène, méthyle, chlore, méthoxy ou cyano, ou
R⁵ et R⁶ forment ensemble un pont -CH=CH-CH=CH-,
R⁷ représente un hydrogène, méthyle, hydroxyéthyle, hydroxypropyle, cyanoéthyle,
R⁸ et R⁹ représentent indépendamment l'un de l'autre un hydrogène, méthyle, méthoxy, chlore, cyano, nitro ou acétylamino et
X^{⊖} représente un anion.

6. Colorants cationiques de thiadiazolediphénylamine selon les revendications 1 à 5, caractérisés en ce que, dans la formule (I)
R⁷ représente un hydrogène et tous les autres restes ont la signification donnée à la revendication 5.

7. Anhydrobases de formule (II) 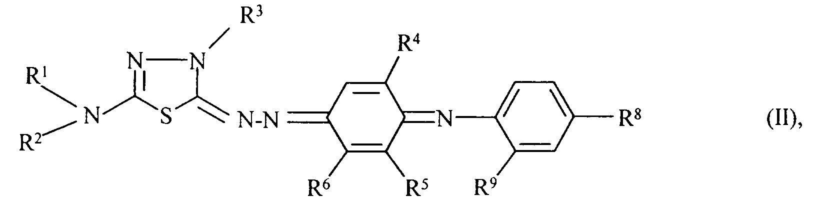 où R¹ à R⁶, R⁸ et R⁹ ont les significations données à la revendication 1.

8. Procédé de préparation de colorants cationiques de thiadiazolediphénylamine selon la revendication 1, caractérisé en ce qu'on diazote des 2-amino-1,3,4-thiadiazoles de formule (III) 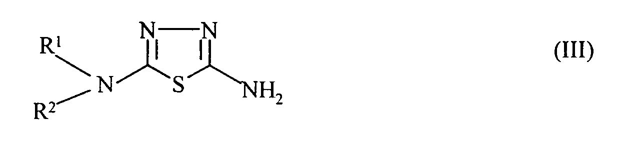 où
R¹ et R² ont la signification donnée à la revendication 1, on couple avec des dérivés de diphénylamine de formule (IV) 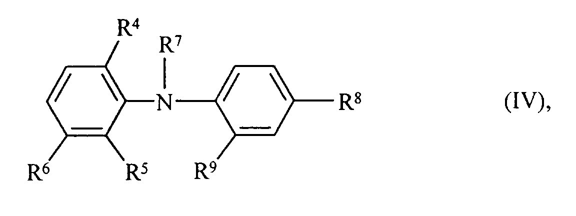
où
R⁴ à R⁹ ont la signification donnée à la revendication 1,
et ensuite, on quaternise avec des composés de formule (V)
R³X (V)
où R³ et X ont la signification générale donnée, préférée et particulièrement préférée, ou leurs précurseurs.

9. Procédé de préparation de colorants cationiques de thiadiazolediphénylamine selon la revendication 1, caractérisé en ce qu'on fait réagir des colorants de formule (VI) 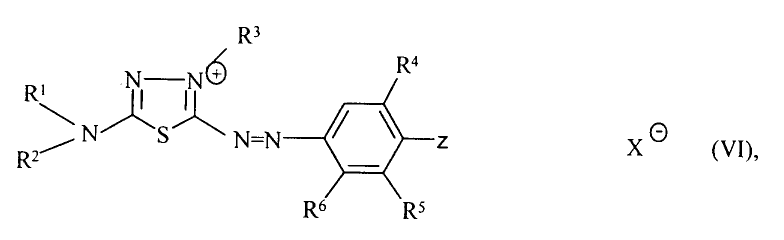 où
R¹ à R⁶ et X^{⊖} ont la signification donnée à la revendication 1 et
Z représente un halogène, hydroxy, alcoxy, cycloalcoxy, aryloxy, amino, dialkylamino, acyloxy ou acylamino,
avec des amines de formule (VII) 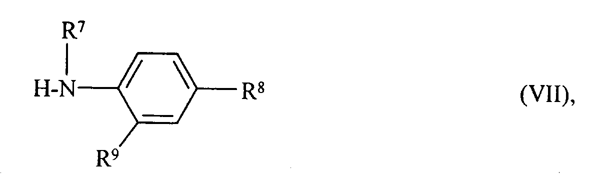 où
R⁷ à R⁹ ont la signification donnée à la revendication 1.

10. Utilisation de colorants selon la revendication 1, pour teindre et imprimer des polymères et copolymères d'acrylonitrile et de dicyanoéthylène, ainsi que des fibres de polyamide et de polyester modifiés de manière acide et pour teindre et imprimer des matériaux cellulosiques tannés, du papier, de la soie et du cuir et pour produire des liquides d'écriture, des liquides de tampon, des pâtes de stylo à bille et des encres pour jet d'encre et en sérigraphie.

11. Polymères et copolymères de l'acrylonitrile et du dicyanoéthylène, des fibres modifiées de manière acide en polyamide, des matériaux cellulosiques tannés, du papier, de la soie, du cuir, des liquides à écrire, des liquides de tampon, des pâtes de stylo à bille et des encres pour jet d'encre, caractérisés en ce qu'ils sont teints avec des colorants selon la revendication 1.
